# EUROPEAN PATENT APPLICATION

(11) **EP 4 617 878 A1**
(43) Date of publication of application: **17.09.2025**
(21) Application number: 23896196.5
(22) Date of filing: 13.09.2023
(51) Int. Cl.: G06F 11/07

(54) **MEMORY MAPPING METHOD AND RELATED DEVICE**

(30) Priority: 30.11.2022 CN 202211521408; 27.12.2022 CN 202211691518
(71) Applicant: Huawei Technologies Co., Ltd., Shenzhen, Guangdong 518129 (CN)
(72) Inventor: WANG, Sheng, Shenzhen, Guangdong 518129 (CN); ZHU, Guoliang, Shenzhen, Guangdong 518129 (CN); JIAO, Huifang, Shenzhen, Guangdong 518129 (CN); CHEN, Anwen, Shenzhen, Guangdong 518129 (CN)
(74) Representative: Isarpatent
(86) International application number: PCT/CN2023/118425
(87) International publication number: WO 2024/114039

(57) **Abstract**

A memory mapping method and a related device are provided. The memory mapping method includes: obtaining a memory failed row address of a first memory; obtaining, by a matching and searching circuit, an address mapping table, where the address mapping table includes a mapping relationship between the memory failed row address and a memory remapping row address corresponding to the memory failed row address; and when an access target of the first memory is the memory failed row address, obtaining, based on the address mapping table, the memory remapping row address to which the memory failed row address is mapped, where a memory area indicated by the memory remapping row address is in reserved space of the first memory. Because the matching and searching circuit may be integrated into any address command output circuit or drive circuit in a memory access path of the first memory, a user may customize an integration location and a quantity of redundant resources used for replacement, to implement a plurality of times of reversible replacement based on the address mapping table, thereby greatly reducing a memory fault rate and improving memory reliability.

## Description

This application claims priorities to Chinese Patent Application No. 202211521408.4, filed with the Chinese National Intellectual Property Administration on November 30, 2022 and entitled "METHOD FOR A PLURALITY OF TIMES OF ROW REPLACEMENT OF DRAM", and to Chinese Patent Application No. 202211691518.5, filed with the Chinese National Intellectual Property Administration on December 27, 2022 and entitled "MEMORY MAPPING METHOD AND RELATED DEVICE", both of which are incorporated herein by reference in their entireties.

### TECHNICAL FIELD

Embodiments of this application relate to the computer field, and in particular, to a memory mapping method and a related device.

### BACKGROUND

With the development of services such as high-performance computing, big data analysis, and in-memory databases, applications have increasingly urgent requirements on a memory capacity and a bandwidth.

Under the continuous drive of requirements on memory capacity density and bandwidth performance, a memory manufacturing process is continuously shrinking and an interface rate is continuously increasing. In addition, with the upgrade of the manufacturing process, a probability that a memory error occurs and a memory failure rate gradually increase, and this poses great risks to memory reliability. Therefore, the memory error needs to be detected, and a detected memory failed row (row) is replaced. For example, a current memory device manufacturer sets a replacement function in a memory device.

However, the setting of the replacement function in the memory device is to preset redundant space used for replacement, and the redundant space cannot be changed. As a result, a quantity of times of memory replacement is limited, a specific service performance loss is accompanied, and a fault requirement of a current memory cannot be met.

### SUMMARY

Embodiments of this application provide a memory mapping method, to flexibly define an integration location of an address mapping table and a quantity of redundant resources used for replacement, and implement a plurality of times of reversible replacement of a memory failed row based on the address mapping table, thereby avoiding a service performance loss, greatly reducing a memory fault rate, and improving memory reliability. Embodiments of this application further provide a corresponding memory mapping circuit, a computing device, a computer-readable storage medium, a chip system, a computer program product, and the like.

A first aspect of this application provides a memory mapping method. The method includes: obtaining a memory failed row address of a first memory (where the first memory is, for example, a memory module, and specifically, is one of a rambus in-line memory module (rambus in-line memory module, RIMM) memory module, a single in-line memory module (single in-line memory module, SIMM) memory module, or a dual in-line memory module (dual in-line memory module, DIMM) memory module); obtaining, by a matching and searching circuit, an address mapping table, where the address mapping table includes a mapping relationship between the memory failed row address and a memory remapping row address corresponding to the memory failed row address; and when an access target of the first memory is the memory failed row address, obtaining, based on the address mapping table, the memory remapping row address to which the memory failed row address is mapped, where a memory area indicated by the memory remapping row address is in reserved space of the first memory, and the matching and searching circuit is integrated into an address command output circuit or a drive circuit in a memory access path of the first memory.

In this application, an example in which the memory mapping method is performed by a computing device is used as an example. To perform memory mapping, the matching and searching circuit first needs to be enabled to obtain the address mapping table, where the matching and searching circuit is integrated into the address command output circuit or the drive circuit in the memory access path of the first memory. Specifically, the matching and searching circuit is integrated into any address command output circuit or drive circuit between an address mapping module of a memory controller and a memory chip. The memory access path of the first memory may be understood as a path for a memory controller in a processor of the computing device to access a memory chip in the first memory.

The memory area indicated by the memory remapping row address in this application is in the reserved space of the first memory. The reserved space of the first memory may be from a user memory chip/device capacity in the first memory, in other words, the reserved space is visible to a user, and needs to be reserved by using an additional software method. In addition, the reserved space may alternatively be from redundant space designed by a memory manufacturer beyond a nominal capacity of the first memory. The reserved space is beyond an addressing range of the memory controller, and is invisible to a user.

The first memory in this application is loaded in the computing device, and the computing device may be any computer device, server, or storage device that uses a memory.

In this application, the memory mapping method may be performed in a first memory production phase, a computing device start phase, and a computing device running phase. After the address mapping table is generated, a memory address may be replaced based on the address mapping table.

To resolve a problem that a memory row address is failed, one method is that a memory device manufacturer sets an address replacement function in a memory device, in other words, sets a mapping table in each memory device, and when an accessed memory address is a failed address, replaces the failed address in the memory device with a new memory address based on the mapping table. However, because the device is packaged by the memory manufacturer, the address replacement function set in the memory device can only be preset by the memory manufacturer, and the user of the memory cannot change the address replacement function, causing a limited quantity of times of memory replacement. In addition, the replacement function is set for each memory device, causing a definite memory performance loss.

In this application, the matching and searching circuit is integrated into the address command output circuit or the drive circuit in the memory access path of the first memory, and these circuits (where for example, the matching and searching circuit is disposed in the memory controller or a registering clock driver) are all outside the device and are circuits that can be controlled by the user. When a processing chip (for example, a CPU, a GPU, or an NPU) in the computing device accesses the memory, an access request from a memory interface of a mainboard arrives at the memory. Then, an access request address passes through the matching and searching circuit, and the matching and searching circuit replaces the failed address. Finally, based on a replaced access address, the access request enters each memory device to complete data access.

It can be learned that, based on the solution provided in this application, each matching and searching circuit is connected to a plurality of devices. Therefore, a plurality of action objects (devices) can be served by setting an address mapping table only in one matching and searching circuit, to avoid repeatedly setting the replacement function in each device. In addition, because the matching and searching circuit is a circuit that can be edited by the user, the user may also customize a size of the address mapping table that can be stored in the matching and searching circuit. A larger address mapping table may replace more failed rows of memory addresses, and it is also allowed to replace the failed rows of memory addresses for a plurality of times. Further, because the matching and searching circuit can be customized by the user, a replacement granularity may be expanded in this application, in other words, the plurality of devices are used as a whole for replacement. When it is detected that a failed row occurs in a single device, replacement signals are sent, simultaneously by using a same memory address, for the plurality of devices (for example, a plurality of devices located in a same rank) managed by the matching and searching circuit, causing failed row replacement of the plurality of devices. An advantage may be that one record in the mapping table may be jointly used for the plurality of devices, instead of that each device corresponds to one record in the mapping table, thereby reducing a data amount of the mapping table and saving storage space that needs to be occupied by the mapping table. Further, because the memory area indicated by the memory remapping row address in this application is in the reserved space of the first memory, in other words, the reserved space is visible to the user and can be managed by the user, the user may need to independently determine a size of the reserved space. For example, when a memory row fault occurs at a low frequency, small space is reserved. As the memory ages, reliability gradually decreases, and large space is reserved. Therefore, the solution of this application can improve memory utilization.

In the first aspect, the memory failed row address of the first memory is obtained, and the address mapping table is obtained in the matching and searching circuit. The address mapping table includes the mapping relationship between the memory failed row address and the memory remapping row address corresponding to the memory failed row address. When the access target of the first memory is the memory failed row address, the memory remapping row address to which the memory failed row address is mapped is obtained based on the address mapping table, where the memory area indicated by the memory remapping row address is in the reserved space of the first memory. Because the matching and searching circuit may be integrated into any address command output circuit or drive circuit in the memory access path of the first memory, the user may customize an integration location and a quantity of redundant resources used for replacement, to implement a plurality of times of reversible replacement based on the address mapping table, thereby greatly reducing a memory fault rate and improving memory reliability.

In a possible implementation of the first aspect, the method further includes: obtaining a memory access address from the outside of the first memory; using the obtained memory access address, and performing matching on the memory access address based on the address mapping table; and when the memory access address is matched in the memory failed row address, translating access to the memory access address into access to the memory remapping row address.

In this possible implementation, after obtaining the address mapping table, the matching and searching circuit may perform matching on the memory access address based on the address mapping table. When the memory access address is matched as the memory failed row address in the address mapping table, the memory failed row address is remapped to the memory remapping row address corresponding to the memory failed row address, and finally the memory remapping row address is accessed, to complete replacement of a failed memory address, thereby improving implementability of the solution.

In a possible implementation of the first aspect, the first memory includes a plurality of memory chips, and the matching and searching circuit uses the plurality of memory chips as a whole for row address translation. The foregoing step of obtaining, based on the address mapping table, the memory remapping row address to which the memory failed row address is mapped specifically includes: when a failed row occurs in a single memory chip, translating row addresses in the plurality of memory chips into memory remapping row addresses based on the address mapping table, where translated rows include the failed row.

In this possible implementation, the first memory includes one or more memory channels (channels), one or more dual in-line memory modules (dual in-line memory modules, DIMMs) may be inserted into one memory channel, and one DIMM may include one or more memory ranks (ranks). One rank includes a plurality of memory chips (memory devices, chips), and the matching and searching circuit uses the plurality of memory chips as a whole for row address translation. When the failed row occurs in the single memory chip, the matching and searching circuit is configured to translate the row addresses in the plurality of memory chips into the memory remapping row addresses based on the address mapping table, where the translated rows include the failed row, in other words, an action object of the address mapping table is each chip. For example, an address A is matched in the address mapping table, and the matching and searching circuit replaces addresses A in all the chips, to reduce a data amount of the mapping table and save storage space that needs to be occupied by the mapping table.

In a possible implementation of the first aspect, each of the plurality of memory chips includes a plurality of memory banks memory banks, and the reserved space of the first memory includes at least one row of storage units of each of the plurality of memory banks.

In this possible implementation, one chip includes a plurality of memory banks (banks) or a plurality of memory bank groups (bank groups). A bank is an array including a plurality of storage units. A row of storage units in the bank may be represented by a row (row). The reserved space of the first memory includes at least one row of storage units in each bank, in other words, at least one row of storage units in each bank is used as the reserved space, so that a user can customize larger reserved space, to implement a plurality of times of reversible replacement based on the address mapping table. When a memory row fault occurs at a low frequency, small space is reserved. As the memory ages, reliability gradually decreases, and large space is reserved, to improve memory utilization.

In a possible implementation of the first aspect, the address mapping table is stored in a volatile memory in the matching and searching circuit, and the method further includes: before the first memory stops working, writing the address mapping table into a first storage from the matching and searching circuit, where the first storage is a non-volatile memory located in the computing device, and after the first memory starts to work, loading the address mapping table in the first storage to the matching and searching circuit.

In this possible implementation, the address mapping table is stored in the volatile memory in the matching and searching circuit. Therefore, the address mapping table needs to be written into the first storage of the non-volatile memory for persistent storage. For example, in a computing device running phase, before the first memory stops working, the address mapping table is written into the first storage from the matching and searching circuit, and after the first memory starts to work, the address mapping table in the first storage is loaded to the matching and searching circuit, to avoid a problem of an address mapping table loss.

In a possible implementation of the first aspect, the method further includes: in a start process of a computing device loaded with the first memory, reading the address mapping table from the first storage, and updating the address mapping table through memory self-check of the computing device.

In this possible implementation, the persistently stored address mapping table may be read in the start process of the computing device, and the address mapping table is updated based on a memory self-check function of the computing device, to discover a failed row in the memory in time and replace the failed row in time, thereby improving memory reliability.

In a possible implementation of the first aspect, the volatile memory in the matching and searching circuit is a content addressable memory, a ternary content addressable memory, or a fully associative cache.

In this possible implementation, the volatile memory in the matching and searching circuit may be specifically any one of the content addressable memory, the ternary content addressable memory, or the fully associative cache, to improve implementability of the solution.

In a possible implementation of the first aspect, the address mapping table is stored in a non-volatile memory in the matching and searching circuit.

In this possible implementation, the address mapping table is stored in the non-volatile memory in the matching and searching circuit, so that the address mapping table in the matching and searching circuit can be persistently stored, thereby avoiding a problem of an address mapping table loss.

In a possible implementation of the first aspect, the foregoing step of obtaining, by a matching and searching circuit, an address mapping table includes: when the computing device loaded with the first memory is started, generating the address mapping table; and before the computing device uses the first memory, synchronizing the address mapping table to the matching and searching circuit.

In this possible implementation, in a computing device start phase, the address mapping table may be generated through self-check, and before the computing device uses the first memory, the address mapping table is synchronized to the matching and searching circuit, to avoid a problem of memory data migration that exists when the computing device synchronizes an entry after using the first memory.

In a possible implementation of the first aspect, the foregoing step of obtaining a memory failed row address of a first memory includes: obtaining a first memory fault log of the first memory; extracting a first memory fault feature from the first memory fault log; and performing prediction based on the first memory fault feature to obtain the memory failed row address of the first memory.

In this possible implementation, in a computing device running phase, out-of-band or in-band memory error information is aggregated for an offline training node to perform parameter training on a memory fault prediction model. An algorithm and a model that are obtained through training may be used for online inference and real-time prediction of a memory failure evolution trend, and the address mapping table is updated at a right moment, to reduce or even avoid occurrence of an uncorrectable error.

In a possible implementation of the first aspect, the method further includes: performing an access test on the memory failed row address to determine whether the memory failed row address is a real failed row address; and when the memory failed row is not the real failed row address, releasing the memory failed row address and the memory remapping row address corresponding to the memory failed row address from the address mapping table.

In this possible implementation, in an idle state in a computing device running phase, the memory failed row address may be re-predicted by using a memory fault prediction model, to determine whether the previously predicted memory failed row address is the real failed row address. When the memory failed row address is not the real failed row address, the memory failed row address and the memory remapping row address corresponding to the memory failed row address are released from the address mapping table, to save redundant space in the matching and searching circuit and the reserved space, enable a system to have reversible isolation and release capabilities, reduce a requirement on prediction precision, and improve fault prediction coverage.

In a possible implementation of the first aspect, the method further includes: sending a first command, where the first command is used to enable stopping obtaining the memory failed row address of the first memory.

In this possible implementation, an enabling switch may be set in a computing device start phase. When a second command is sent, the enabling switch is turned on, self-check is started, and obtaining the memory failed row address of the first memory is enabled. Once a memory is found to be failed, replacement is performed in time. When the first command is sent, the enabling switch is turned off, self-check is disabled, and obtaining of the memory failed row address of the first memory is stopped, to achieve an objective of quickly starting the computing device.

In a possible implementation of the first aspect, the matching and searching circuit is integrated into a memory controller or a registering clock driver in the address command output circuit or the drive circuit.

In this possible implementation, the matching and searching circuit is specifically integrated into a memory controller in a processor or a registering clock driver in a rank, to improve implementability of the solution.

A second aspect of this application provides a memory mapping circuit, configured to perform the method according to any one of the first aspect or the possible implementations of the first aspect. Specifically, the memory mapping circuit includes a circuit, a module, or a unit configured to perform the method according to any one of the first aspect or the possible implementations of the first aspect, for example, an obtaining circuit, a matching and searching circuit, a read/write circuit, a generating circuit, a releasing circuit, and a sending circuit.

A third aspect of this application provides a computing device. The computing device includes a mainboard, a processor, a memory, and the memory mapping circuit according to any one of the second aspect or the possible implementations of the second aspect.

The mainboard is configured to: perform memory failed row detection, and send a memory failed row address to the memory mapping circuit. The memory mapping circuit is integrated into the processor or the memory, and the memory is used as a first memory to perform memory failed row address mapping.

According to a fourth aspect of this application, a computer-readable storage medium storing one or more computer-executable instructions is provided. When the computer-executable instructions are executed by a processor, the processor performs the method according to any one of the first aspect or the possible implementations of the first aspect.

According to a fifth aspect of this application, a computer program product storing one or more computer-executable instructions is provided. When the computer-executable instructions are executed by a processor, the processor performs the method according to any one of the first aspect or the possible implementations of the first aspect.

According to a sixth aspect of this application, a chip system is provided. The chip system includes at least one processor and an interface. The interface is configured to receive data and/or a signal. The at least one processor is configured to support a computer device in implementing the function according to any one of the first aspect or the possible implementations of the first aspect. In a possible design, the chip system may further include a storage. The storage is configured to store program instructions and data that are necessary for the computer device. The chip system may include a chip, or may include a chip and another discrete component.

In embodiments of this application, the memory failed row address of the first memory is obtained, and the address mapping table is obtained in the matching and searching circuit. The address mapping table includes the mapping relationship between the memory failed row address and the memory remapping row address corresponding to the memory failed row address. When the access target of the first memory is the memory failed row address, the memory remapping row address to which the memory failed row address is mapped is obtained based on the address mapping table. The memory area indicated by the memory remapping row address is in the reserved space of the first memory. Because the matching and searching circuit may be integrated into any address command output circuit or drive circuit in the memory access path of the first memory, the user may customize the integration location and the quantity of redundant resources used for replacement, to implement the plurality of times of reversible replacement based on the address mapping table, thereby greatly reducing the memory fault rate and improving the memory reliability.

### BRIEF DESCRIPTION OF DRAWINGS

FIG. 1 is a diagram of an architecture of a computer system;
FIG. 2 is a diagram of an embodiment of a memory mapping method according to an embodiment of this application;
FIG. 3 is a schematic flowchart of a first memory production phase according to an embodiment of this application;
FIG. 4 is a schematic flowchart of a computing device start phase according to an embodiment of this application;
FIG. 5 is a schematic flowchart of a computing device running phase according to an embodiment of this application;
FIG. 6 is a diagram of an application architecture of a memory mapping method according to an embodiment of this application;
FIG. 7 is a diagram of an embodiment of a bidirectional lookup table according to an embodiment of this application;
FIG. 8 is a diagram of an architecture of an address mapping table set in a memory controller according to an embodiment of this application;
FIG. 9 is a diagram of an architecture of an address mapping table set in a registering clock driver according to an embodiment of this application;
FIG. 10 is a diagram of an embodiment of a memory mapping circuit according to an embodiment of this application; and
FIG. 11 is a diagram of an embodiment of a computing device according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that with development of technologies and emergence of new scenarios, technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data used in such a way is interchangeable in a proper circumstance, so that embodiments described herein can be implemented in an order other than the order illustrated or described herein. In addition, the terms "include" and "have" and any other variants thereof are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

The specific term "example" herein means "used as an example, embodiment, or illustration". Any embodiment described as "example" herein is not necessarily explained as being superior or better than other embodiments.

In addition, to better describe this application, numerous specific details are provided in the following specific implementations. A person skilled in the art should understand that, this application can also be implemented without some specific details. In some instances, methods, means, elements, and circuits that are well-known to a person skilled in the art are not described in detail, so that a subject matter of this application is highlighted.

Embodiments of this application provide a memory mapping method, to flexibly define an integration location of an address mapping table and a quantity of reserved redundant resources used for replacement, and implement a plurality of times of reversible replacement of a memory failed row based on the address mapping table, thereby avoiding a service performance loss, greatly reducing a memory fault rate, and improving memory reliability. Embodiments of this application further provide a corresponding memory mapping circuit, a computing device, a computer-readable storage medium, a chip system, a computer program product, and the like. Details are separately described in the following.

The following uses an example to describe an application scenario in embodiments of this application.

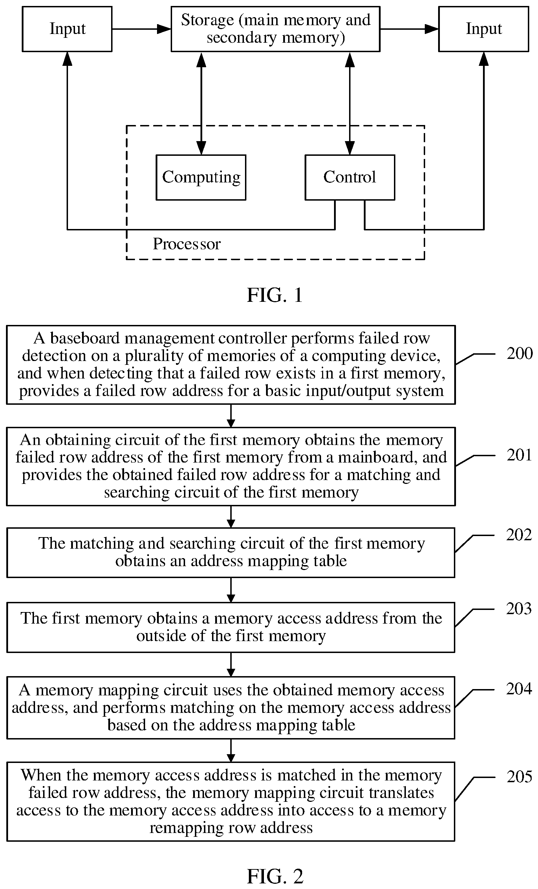

As shown in FIG. 1, a typical Von Neumann computer system includes five components: a computing component, a control component, a storage component, an input component, and an output component, where the storage includes a main memory (memory) and a secondary memory (a solid-state drive, a hard disk drive, or the like). As an integral part of a Von Neumann architecture, the memory mainly serves as a working memory (working memory) that stores instructions and data that are required for computer running. With the development of services such as high-performance computing, big data analysis, and in-memory databases, applications have increasingly urgent requirements on a memory capacity and a bandwidth. Under the continuous drive of requirements on memory capacity density and bandwidth performance, a memory manufacturing process is continuously shrinking and an interface rate is continuously increasing. In addition, a memory failure rate gradually increases, and this poses great risks to memory reliability. Examples are as follows.
(1) A capacitance decreases: As the manufacturing process shrinks, the capacitor capacitance decreases (where a capacitor capacitance in a 25 nm manufacturing process is 18 fF and a capacitor capacitance in a 17 nm manufacturing process decreases to about 8 fF), and a quantity of electric charges that can be stored in a capacitor decreases. As a result, data retention (retention) gradually decreases.
(2) A leakage current increases: Thinning of a capacitor insulation material and a subthreshold effect of an access (access) transistor lead to an increase of the leakage current. As a result, data retention of a storage unit decreases.
(3) A coupling effect increases: Due to size shrinkage, capacitors, bit lines (bit lines), and word lines (word lines) are close to each other, and coupling increases. As a result, a probability of data jump caused by mutual impact between adjacent space increases.
(4) A quantity of row and column errors increases because of process defects: As a size shrinks and capacity density increases, a requirement on processing process precision is continuously increasing. As a result, processing defect density is continuously increasing, where the increase is represented as an increase in a quantity of early failures of a dynamic random access memory (dynamic random access memory, DRAM), especially a significant increase in a quantity of failures that rows/columns are characteristic fault domains.
(5) An interface error probability increases because of an increase in a transmission rate: An interface rate of a double data rate synchronous dynamic random access memory (double data rate synchronous dynamic random access memory, DDR SDRAM), DDR for short, is continuously increasing in every generation. Because a parallel bus with a single-ended signal is used and impact of a memory module socket and the like exists, a probability of data jump on the interface also increases.

Based on statistics collection on memory production failures and live network faults, it can be found that, with the generation evolution, an increasing quantity of memory failed rows exceeds an upper limit of a memory repair capability, a production interception rate increases by generation, and a live network failure rate is continuously increasing. However, a memory failure area is concentrated within a limited quantity of rows. A current memory device manufacturer sets a replacement function in a memory device. However, the setting of the replacement function in the memory device is to preset redundant space used for replacement, and the redundant space cannot be changed. As a result, a quantity of times of memory replacement is limited, a specific service performance loss is accompanied, and a fault requirement of a current memory cannot be met.

Based on this, embodiments of this application provide a memory mapping method, to flexibly define an integration location of an address mapping table and a quantity of reserved redundant resources used for replacement, and implement a plurality of times of reversible replacement of a memory failed row based on the address mapping table, thereby avoiding a service performance loss, greatly reducing a memory fault rate, and improving memory reliability.

The following describes the memory mapping method provided in embodiments of this application with reference to the foregoing application scenario.

As shown in FIG. 2, an embodiment of the memory mapping method provided in embodiments of this application includes the following steps.

200: A baseboard management controller (baseboard management controller, BMC) performs failed row detection on a plurality of memories of a computing device, and when detecting that a failed row exists in a first memory, provides a failed row address for a basic input/output system (basic input/output system, BIOS).

In this embodiment of this application, the BIOS indicates a memory mapping circuit of the first memory to replace the failed row. The memory mapping circuit includes an obtaining circuit and a matching and searching circuit. The matching and searching circuit is integrated into an address command output circuit in a memory access path of the first memory, or is integrated into a drive circuit of the first memory.

Both the BMC and the BIOS are located on a mainboard of the computing device, and the mainboard provides a memory slot for connecting the plurality of memories including the first memory. The mainboard herein includes a mainboard in a common sense, and also includes a combination of the mainboard and a backplane.

It should be noted that, when the first memory is still in a production phase, failed row detection may be performed on the first memory by using another test device. In a computing device start phase, failed row detection may be performed by using the BIOS of the computing device. An execution body of the failed row detection is not limited in this embodiment of this application.

201: The obtaining circuit of the first memory obtains the memory failed row address of the first memory from the mainboard, and provides the obtained failed row address for the matching and searching circuit of the first memory.

The first memory is a memory module. Each memory module includes a plurality of memory devices (memory chips, chips), and each memory device includes a plurality memory banks (banks).

202: The matching and searching circuit of the first memory obtains an address mapping table.

In this embodiment of this application, the computing device first needs to enable the matching and searching circuit to obtain the address mapping table. The matching and searching circuit is integrated into the first memory, and a specific location of the matching and searching circuit is in the memory access path, for example, the address command output circuit or the drive circuit. Specifically, the matching and searching circuit is integrated into any address command output circuit or drive circuit between an address mapping (address mapping) module of a memory controller and a DRAM device (memory chip). The memory access path of the first memory may be understood as a path for a processor of the computing device to access a memory, for example, a path for a memory controller in a central processing unit (central processing unit, CPU), a data processing unit (data processing unit, DPU), a graphics processing unit (graphics processing unit, GPU), a tensor processing unit (tensor processing unit, TPU), or an embedded neural network processing unit (neural network processing unit, NPU) to access a DRAM device in the first memory. The address command output circuit or the drive circuit in the memory access path includes a memory controller (DDR controller, DDRC) in the processor of the computing device, and further includes a registering clock driver (registering clock driver, RCD) in the first memory. In this embodiment of this application, an example in which the matching and searching circuit is integrated into the RCD is used for description.

Further, the first memory is loaded in the computing device by using the memory slot provided by the mainboard of the computing device. The computing device may be any computer device, server, or storage device that uses a memory. The matching and searching circuit may include a volatile memory, for example, a content addressable memory (content addressable memory, CAM), a ternary content addressable memory (ternary content addressable memory, TCAM), and a fully associative cache, namely, a fully associative static random access memory (static random access memory, SRAM) cache. The matching and searching circuit may alternatively include a non-volatile memory (non-volatile memory, NVM), for example, a one-time programmable memory (eFuse), a programmable read-only memory (programmable read-only memory, PROM), an electrically erasable programmable read-only memory (electrically erasable programmable read-only memory, E2PROM), and a storage class memory (storage class memory, SCM). In this embodiment of this application, an example in which the matching and searching circuit includes the TCAM is used for description. In other words, the address mapping table is stored in the TCAM, and the TCAM is integrated into the RCD of the first memory.

Further, the address mapping table includes a mapping relationship between the memory failed row address and a memory remapping row address corresponding to the memory failed row address. The address mapping table is used to remap the memory failed row address to the memory remapping row address when an access target of the first memory is the memory failed row address. A memory area indicated by the memory remapping row address is in reserved space of the first memory. The reserved space of the first memory may be from a user DRAM device capacity in the first memory, in other words, the reserved space is visible to a user, and needs to be reserved by using an additional software method. In addition, the reserved space may alternatively be from redundant space designed by a memory manufacturer beyond a nominal capacity of the first memory. The reserved space is beyond an addressing range of the memory controller, and is invisible to a user. In this embodiment of this application, an example in which the reserved space is from the user DRAM capacity in the first memory is used for description.

Further, the first memory is specifically a high-speed memory. For example, the first memory is a DDR, a low-power DDR (low-power DDR, LPDDR), a graphics DDR (graphics DDR, GDDR), a high bandwidth memory (high bandwidth memory, HBM), or an SCM. In this embodiment of this application, an example in which the first memory is the DDR is used for description. The first memory includes one or more memory channels (channels), one or more dual in-line memory modules (dual in-line memory modules, DIMMs) may be inserted into one memory channel, and one DIMM may include one or more memory ranks (ranks). One rank includes a plurality of memory chips (chips), and the memory chip may also be referred to as a memory device. One chip includes a plurality of memory banks (memory banks, banks) or a plurality of memory bank groups (bank groups). A bank is an array including a plurality of storage units. A row of storage units in the bank may be represented by a row (row). When a medium of the memory is a DRMA, the memory chip is also referred to as a DRAM device.

Further, the matching and searching circuit uses the plurality of memory chips as a whole for row address translation. When a failed row occurs in a single memory chip, the matching and searching circuit translates row addresses in the plurality of memory chips into memory remapping row addresses based on the address mapping table, where translated rows include the failed row, in other words, an action object of the address mapping table is each chip, and the matching and searching circuit replaces memory failed row addresses in all the chips. In addition, the reserved space of the first memory includes at least one row (row) of each of the plurality of memory banks, in other words, at least one row of storage units in each bank is used as the reserved space, so that the user can customize larger reserved space, to implement a plurality of times of reversible replacement based on the address mapping table.

In this embodiment of this application, because the matching and searching circuit is integrated into the address command output circuit or the drive circuit in the memory access path of the first memory, the user may customize, in the address command output circuit or the drive circuit in the memory access path, a size and an integration location of the matching and searching circuit, in other words, customize a size and an integration location of the address mapping table. A larger customized address mapping table indicates more memory remapping row addresses and larger reserved space used as a redundant resource. The size and location may be flexibly customized by the user based on a requirement and an actual situation.

In the memory mapping method provided in this embodiment of this application, step 201 and step 202 may be independently performed in a plurality of scenarios. The following separately provides descriptions. To be specific, in a phase in which the memory manufacturer produces the memory, in the computing device start phase, and in a phase in which the computing device runs a service, mapping and replacement of a memory row may be performed separately, and corresponding technical effects are achieved. One or more of the three scenarios may be selected to perform mapping and replacement of the memory row.

### I. First memory production phase

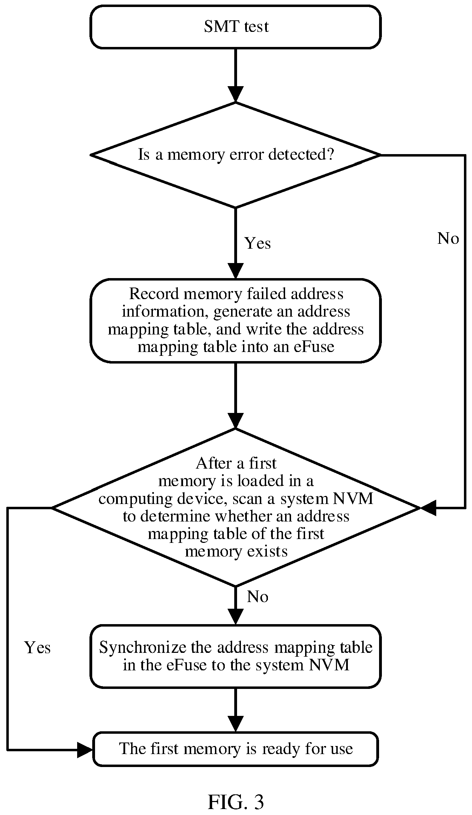

As shown in FIG. 3, in the first memory production phase, the memory failed row address of the first memory may be obtained by using a test device (where in this case, the test device is used as the computing device, and performs the method embodiment in this application). Specifically, a device sorting program test (smart memory test, SMT) is performed, and an early failure is excited in advance based on a burn-in sorting algorithm. Once a memory error (error) is detected, a corresponding memory failed row address is recorded, a memory remapping row address is allocated for the memory failed row address, and an address mapping table is generated in the matching and searching circuit based on a predetermined format, to improve memory production first pass yield.

Further, because the TCAM is a volatile memory, an NVM, for example, an eFuse, may be further added to the first memory, and the address mapping table generated at this time is written into an eFuse in the RCD. The address mapping table generated during production of the first memory is used as unique information of the first memory to implement permanent tracking by using the built-in eFuse. Generally, an eFuse programming interface is not open to a user on a live network, to prevent a misoperation of the user. Because the eFuse is used to persistently store the address mapping table determined when the production of the first memory fails, the address mapping table further needs to be persistently stored in another non-volatile medium.

Specifically, after the first memory is loaded to the computing device, the address mapping table in the eFuse further needs to be synchronized to a first storage of the computing device. The first storage is an NVM, and the first storage may be integrated into an RCD chip, a module printed circuit board (printed circuit board, PCB), a system mainboard, and the like. The processor of the computing device needs to detect whether the address mapping table in the eFuse is synchronized to the NVM of the computing device. The computing device can use the first memory only after the synchronization succeeds. In this case, the first memory is ready for use.

The address mapping table obtained in the memory production phase may be stored in a non-volatile storage medium of a memory module. When the memory is used by the user, the user may obtain the address mapping table from the non-volatile storage medium, and add a newly found failed row to the address mapping table during memory self-check in the computing device start phase.

### II. Computing device start phase

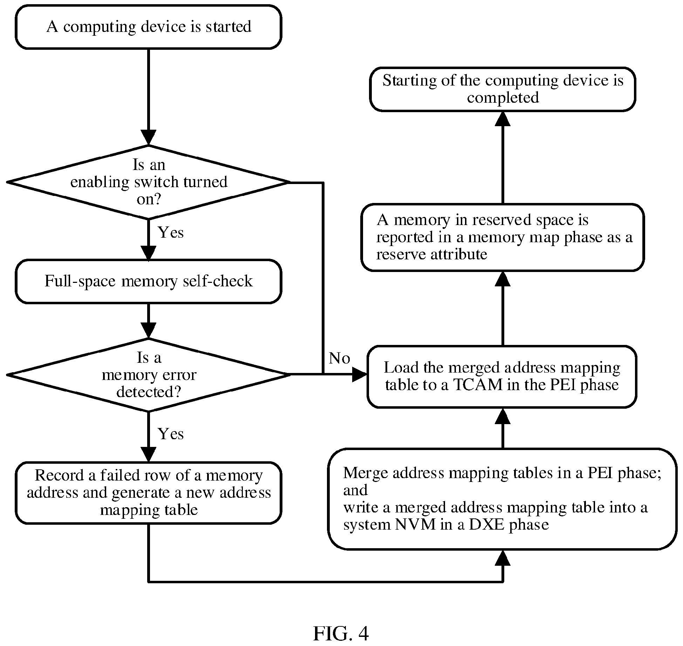

As shown in FIG. 4, a user installs the memory in the computing device, and an enabling switch may be set in the computing device (loaded with the first memory). When a second command is sent, the enabling switch is turned on, self-check is started, and obtaining the memory failed row address of the first memory is enabled. Once the memory is found to be failed, replacement is performed in time. When a first command is sent, the enabling switch is turned off, self-check is disabled, and obtaining of the memory failed row address of the first memory is stopped, to achieve an objective of quickly starting the computing device.

When the computing device is started, after the first command is sent, specifically, in a memory initialization phase (pre extensible firmware interface initialization, PEI), the BIOS of the computing device performs full-space memory detection, for example, performs a memory built-in-self test (memory build-in-self test, Mbist). Once a memory error is detected, a corresponding memory failed row address needs to be recorded, a memory remapping row address is allocated in reserved space for the memory failed row address, an address mapping table is generated in the matching and searching circuit based on a predetermined format, and the address mapping table in the TCAM is synchronized to a system persistent NVM in the computing device for backup, for example, an onboard serial peripheral interface (serial peripheral interface, SPI) flash.

Further, in the start process of the computing device loaded with the first memory, the address mapping table is read from a first storage, and the address mapping table is updated through memory self-check of the computing device. Specifically, in the PEI phase when the computing device is started, a product serial number (serial number, SN) of the first memory is used as a unique identification mark, the address mapping table in the first storage NVM of the computing device, the address mapping table recorded in the eFuse in the first memory production phase, and an address mapping table generated through memory self-check in the PEI phase when the computing device is started are read, and an information union set thereof is obtained. In the foregoing three recorded address mapping tables, entries of different rows are directly merged (Rd-Merge). If a memory failed row address is replaced for a plurality of times, to be specific, replacement information of a row exists in two or more record locations, an address mapping table with a higher confidence priority is used for overwriting. A confidence priority of the NVM>a confidence priority of the eFuse>a confidence priority of the PEI self-check. For example, the memory failed row address is A1, a memory remapping row address corresponding to the address mapping table recorded in the NVM is B1, a memory remapping row address corresponding to the address mapping table recorded in the eFuse is B2, and a memory remapping row address corresponding to the address mapping table recorded in the memory self-check in the PEI phase is B3. In this case, it is finally determined that a memory remapping row address corresponding to the memory failed row address A1 is B1, and the memory remapping row address is synchronized to the matching and searching circuit TCAM. In this case, the computing device does not use the first memory, and this avoids a problem of memory data migration. Finally, a merged address mapping table is written into the first storage NVM in a DXE phase.

Optionally, when the reserved space is from the user DRAM capacity in the first memory, in an address mapping (memory map) phase of the BIOS when the computing device is started, a system memory mapping relationship and a memory segment attribute may be defined by using a memory descriptor, and then transferred to an operating system (operating system, OS) of the computing device through an advanced configuration and power interface (advanced configuration and power interface, ACPI). The reserved space may be reported in the memory map phase as a reserve attribute. It should be noted that, because a memory map is a start service, the memory map has exited when the computing device runs, and cannot be woken up, the reserved space cannot be set for a hot-added memory during running. When the reserved space is from the redundant space designed by the memory manufacturer beyond the nominal capacity of the first memory, this step does not need to be performed when the computing device is started.

### III. Computing device running phase

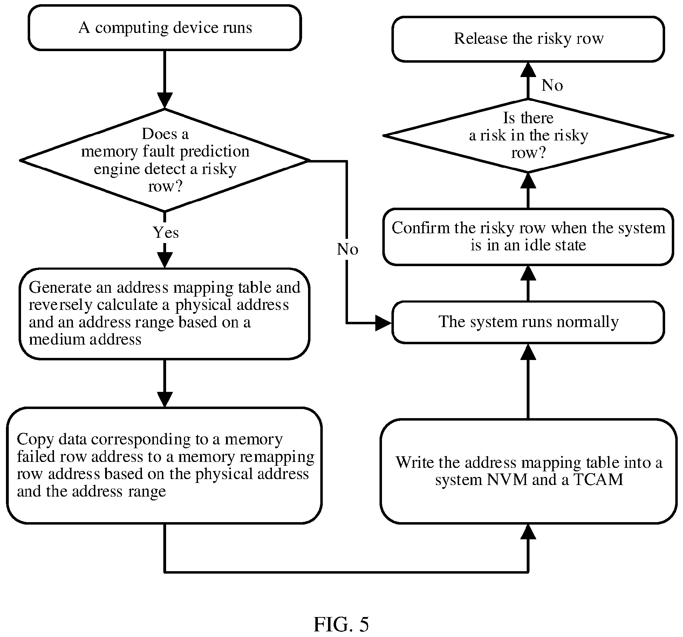

As shown in FIG. 5, when the computing device runs, a first memory fault log of the first memory is obtained, a first memory fault feature is extracted from the first memory fault log, and prediction is performed based on the first memory fault feature, to obtain the memory failed row address of the first memory.

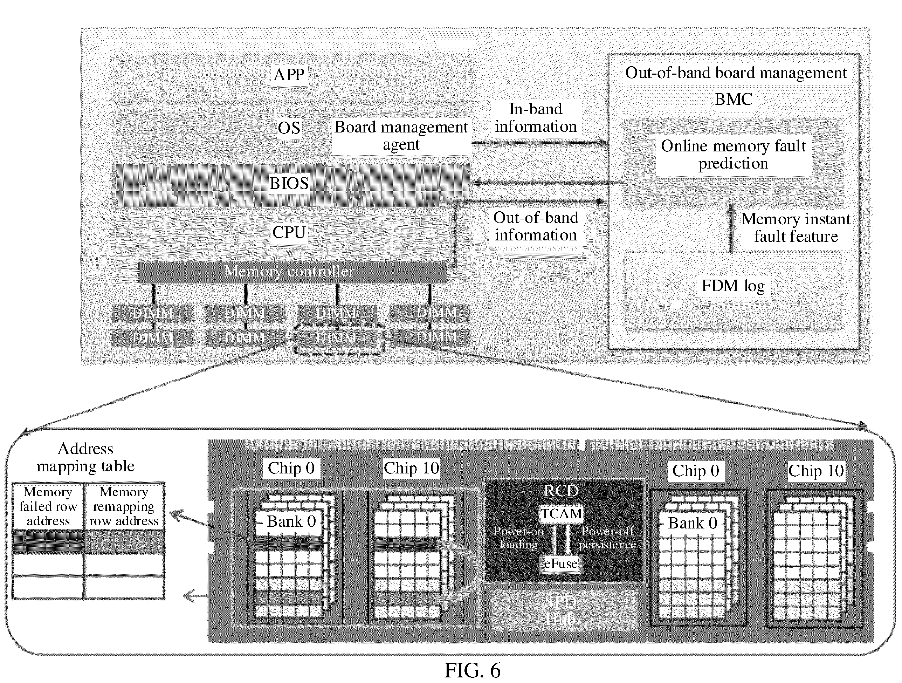

Specifically, as shown in FIG. 6, the computing device includes an application (APP), an OS, a BIOS, and a CPU. A memory controller is disposed in the CPU. In-band information (where management control information and service bearing information are transmitted through a same logical channel) collected by a board management agent in the OS in the computing device, that is, information collected through a data channel, and out-of-band information (transmitted through different logical channels) collected by a baseboard management controller BMC disposed in the computing device, that is, information collected through an additional channel other than the data channel, are aggregated in the BMC in real time as the first memory fault log, and a federal diagnose module (federal diagnose module, FDM) log (log) is formed. The FDM log records bit jump information of a row in the first memory. A memory fault prediction engine deployed in the BMC may perform fault prediction by using a first memory fault feature (a memory instant fault feature) extracted from the FDM log, and predict which rows in the first memory are failed (which may be understood as risky rows), to finally obtain the memory failed row address of the first memory.

It should be understood that an address mapping table generated in a running state of the computing device may be dynamically replaced and released, and is not permanent. Therefore, a requirement on precision of fault prediction may be reduced, thereby improving coverage.

If the memory fault prediction engine predicts that a row has a high failed risk, the BMC records risky row information. During reliability, availability, and serviceability (reliability, availability, and serviceability, RAS) interrupt processing, the BIOS queries, through an intelligent platform management interface (intelligent platform management interface, IPMI) interface, whether the BMC has a risky row warning. If the BMC has the risky row warning, the BIOS starts a row replacement process, allocates a memory remapping row address in reserved space for the memory failed row address, and generates a new address mapping table. In addition, to performing row replacement of the address mapping table when the computing device is in use, not only a mapping relationship in the address mapping table needs to be modified, but also data copying needs to be performed.

A medium row address is reported through fault prediction, and a physical address that can be operated by the BIOS needs to be reversely calculated. Because a sum of all DRAM capacities is equal to a DRAM space size reported by the BIOS, the physical address and the medium address are in one-to-one mapping relationship. Reversible reverse mapping needs to exist to implement translation from the medium address to the physical address. Therefore, a physical address corresponding to a start address of the row may be calculated as a copy start address. In addition, a continuous address range of the row is calculated based on a quantity of interleaved channels (ways). The data copying may be implemented by directly operating the physical address by using a memory copy function (memcpy) in the BIOS, where reading, error correction, and writing are performed internally at a cache line (cache line, CL) granularity, the foregoing physical address that is reversely calculated is used as the copy start address, the continuous address range is used as a copy length, and data corresponding to the memory failed row address is directly copied to the allocated memory remapping row address. After the copying is completed, the address mapping table is merged with the address mapping table recorded in the NVM in the first storage based on a predefined format to generate a new address mapping table, and then the address mapping table is overwritten into the TCAM through an I3C bus, and is overwritten into the system NVM.

It should be noted that, after the foregoing operations are completed, when the computing device runs, it is found that an error is still reported after a memory failed row address is replaced. It indicates that a memory remapping row address to which the row address is remapped has been failed, the memory remapping row address needs to be further updated, and the memory remapping row address is remapped to another redundant row. After a mapping relationship in the address mapping table is successfully modified, because underlying mapping has been changed, subsequent access to the memory failed row address is redirected to the memory remapping row address.

In this embodiment of this application, the BMC aggregates out-of-band or in-band memory error information for an offline training node to perform parameter training on a memory fault prediction model. An algorithm and a model that are obtained through training may be used for online inference and real-time prediction of a memory failure evolution trend, and the BIOS is notified at a right moment to generate a new address mapping table, to reduce or even avoid occurrence of an uncorrectable error (uncorrectable error, UCE).

Refer to FIG. 6. It can be learned that the computing device accesses a plurality of DIMMs in the first memory by using the memory controller. The DIMM includes a plurality of memory chips (for example, a chip 0 to a chip 10 in a rank), an RCD, and a serial presence detect hub (serial presence detect hub, SPD Hub). Each memory chip includes a plurality of memory banks (for example, banks 0). A TCAM and an eFuse are disposed in the RCD. When the first memory starts to work/powers on, the TCAM loads an address mapping table from the eFuse. When the first memory stops working/powers off, the TCAM synchronizes the address mapping table to the eFuse or the system NVM of the computing device to implement persistent storage. A memory access address is transmitted from the memory controller to the TCAM in the RCD through an edge connector of the DIMM for matching, the memory failed row address in the memory bank is remapped to the memory remapping row address, and then access is performed. For example, the memory failed row address is remapped to the memory remapping row address in a same bank.

Further, before the first memory stops working, in other words, before the computing device stops working, the address mapping table needs to be written into the first storage from the matching and searching circuit. After the first memory starts to work, in other words, after the computing device starts to work, the address mapping table in the first storage is loaded to the matching and searching circuit, to implement persistent storage and update of the address mapping table.

Further, when a system of the computing device is idle (idle), risk confirmation and release may be performed in a same manner of obtaining the memory failed row address, in other words, an access test is performed on the memory failed row address to obtain a second memory fault log of the first memory, then a second memory fault feature is extracted from the second memory fault log, and prediction is performed based on the second memory fault feature to determine whether the memory failed row address is a real failed row address. When it is predicted that a row failed risk of the memory failed row address is low, it is determined that the memory failed row address is not the real failed row address, and the memory failed row address and the memory remapping row address corresponding to the memory failed row address are released from the address mapping table, to save redundant space in the TCAM and the reserved space, enable the system to have reversible isolation and release capabilities, reduce a requirement on prediction precision, and improve fault prediction coverage.

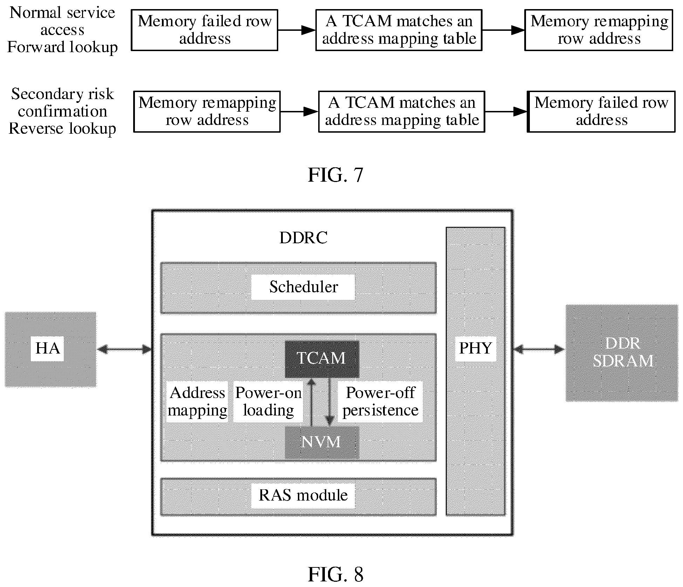

Optionally, for risk confirmation and release, a TCAM bypass (bypass) switch may further be designed in the RCD. After the TCAM bypass switch is turned on through an enabling configuration of a register, the TCAM is not queried or matched for access to the memory. This may implement access to a replaced failed row address. In addition, as shown in FIG. 7, a bidirectional lookup table may be further designed, to automatically determine, based on an input address range, whether service access or risk pressure test confirmation is performed. A bidirectional lookup table disposed on the RCD is used as an example. If an input row address range is user addressing space (for example, 0 to 10000), forward lookup is performed, and the memory failed row address is mapped to the memory remapping row address. If an input row address range is a reserved space address (for example, 10000 to 11000), reverse lookup is performed, the memory remapping row address is mapped to the memory failed row address, and whether the access can succeed is determined. Then, based on this, a pressure test is performed on the memory failed row address to implement secondary risk confirmation, thereby determining whether the memory failed row address is a real row failed address and whether the memory failed row address needs to be released.

As shown in FIG. 8, the TCAM provided in this embodiment of this application may be further integrated into a memory controller of a processor of a first device. The memory controller includes at least several parts: an RAS module, a scheduler, an address mapping module, and a physical layer (PHY). The memory controller is connected to a HA. The RAS module implements an RAS feature of a memory subsystem. The scheduler is configured to schedule a memory access task with high efficiency and high quality of service (quality of service, QoS). The address mapping module completes translation of a system medium address to a DDR physical address, so that the memory access complies with a DDR protocol. The memory access address is sent to the PHY by using a DDR physical interface (DDR PHY Interface, DFI) protocol. The PHY is connected to an off-chip DDR SDRAM through an input/output (I/O) interface, translates the DFI protocol into the DDR protocol, and maximizes a sampling window through fine adjustment of an interface time sequence and calibration of an interface feature. In addition, the TCAM and the NVM are disposed in the address mapping module. When the first memory starts to work/powers on, the TCAM loads the address mapping table from the NVM. When the first memory stops working/powers off, the TCAM synchronizes the address mapping table to the NVM to implement persistent storage.

203: The first memory obtains a memory access address from the outside of the first memory.

Access is initiated by a processor that has memory access permission in the computing device, and the processor used as an external visitor may be, for example, a CPU, a GPU, a DPU, or an NPU.

204: The memory mapping circuit uses the obtained memory access address, and performs matching on the memory access address based on the address mapping table.

205: When the memory access address is matched in the memory failed row address, the memory mapping circuit translates access to the memory access address into access to the memory remapping row address.

For read access, data in the remapping row address is returned to the external visitor in step 203. For write access, data is written into the remapping row address, and a write success response is returned to the external visitor in step 203.

In step 202, the address mapping table generated in any phase needs to be matched and used when the memory is accessed. First, the memory access address from the outside of the first memory is obtained, where the memory access address may be sent by the processor of the computing device, and may be specifically bank group information, bank information, or row information input by using an input command address (input command address, DCA), and then matching is performed on the memory access address based on the address mapping table. When the access target of the first memory is the memory failed row address, the memory remapping row address to which the memory failed row address is mapped is obtained based on the address mapping table. It should be understood that step 202 to step 205 are specifically performed by the matching and searching circuit in the computing device.

For example, the address mapping table shown in Table 1 includes four groups of mapping relationships, where A indicates a failed row in a bank in the first memory, and B indicates a corresponding remapping row in the same bank in the first memory. For example, A1 indicates a first row (for example, a row 1) in a bank 0, and B1 indicates a last row (for example, a row 100) in the bank 0; A2 indicates a second row in a bank 1, and B2 indicates a last row in the bank 1; A3 indicates a second row in a bank 2, and B3 indicates a last but one row in the bank 2; and A4 indicates a first row in a bank 3, and B4 indicates a last but two row in the bank 3.

**Table 1**

| Memory failed row address | Memory remapping row address |
|---|---|
| A1 | B1 |
| A2 | B2 |
| A3 | B3 |
| A4 | B4 |

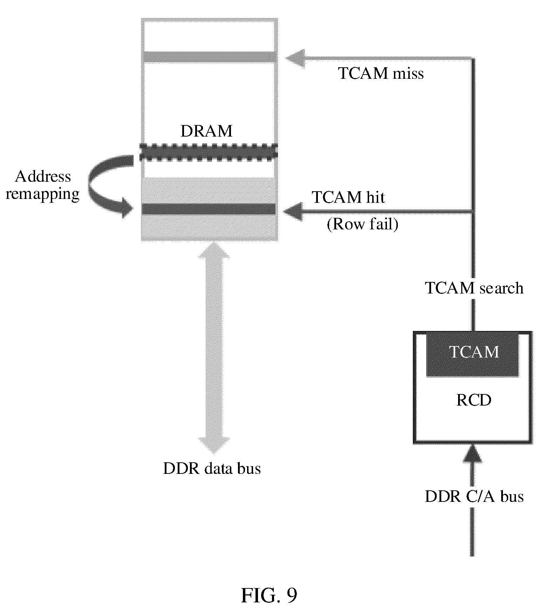

Specifically, as shown in FIG. 9, the memory access address is input from the memory access path to the first memory. When the memory access address reaches the TCAM in the RCD through a DDR C/A bus, matching (TCAM search) starts. When the memory access address is matched as the memory failed row address in the address mapping table, for example, when the memory access address is A1, it may be understood as that a row fail (row fail) exists in the memory access address, and a TCAM hit (hit) exists, in other words, the matching succeeds. The memory failed row address in the DRAM is remapped to the memory remapping row address B1 corresponding to the memory failed row address, and a subsequent access target is replaced with the memory remapping row address B1, in other words, data corresponding to the memory remapping row address B1 is read through a DDR data bus (DDR data bus). When the memory access address is A5, matching cannot be performed in the address mapping table, and it may be understood as a TCAM miss (miss). A subsequent access target is still the memory access address A5, and data corresponding to the memory access address A5 is directly read through a DDR data bus.

In this embodiment of this application, the memory failed row address of the first memory is obtained. The address mapping table is generated in the matching and searching circuit. The address mapping table includes the memory failed row address and the memory remapping row address corresponding to the memory failed row address. The address mapping table is used to remap the memory failed row address to the memory remapping row address when the access target of the first memory is the memory failed row address, and the memory area indicated by the memory remapping row address is in the reserved space of the first memory. Because the matching and searching circuit is integrated into the address command output circuit or the drive circuit in the memory access path of the first memory, the user may flexibly define an integration location of the address mapping table and a quantity of reserved redundant resources, and implement a plurality of times of reversible replacement based on the address mapping table without a need to restart the system. Neither a kernel mode nor a user mode is aware of the replacement, to avoid a service performance loss, greatly reduce a memory fault rate, and improve memory reliability.

The foregoing describes the memory mapping method provided in embodiments of this application. The following describes related devices provided in embodiments of this application with reference to the accompanying drawings.

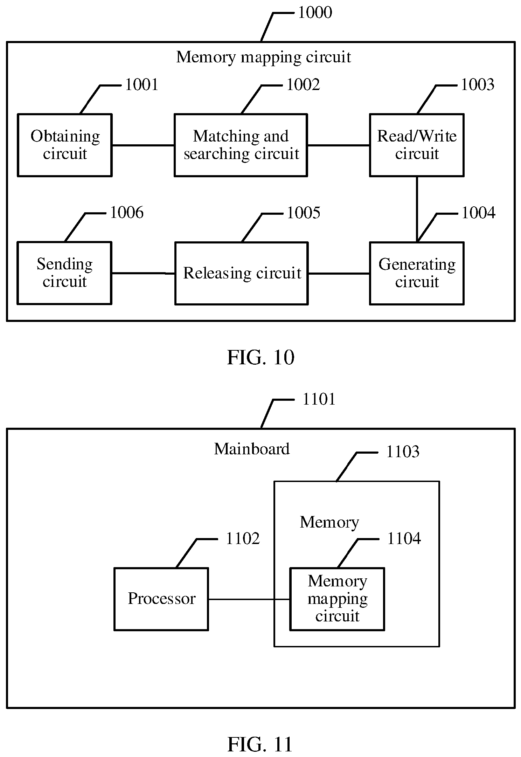

As shown in FIG. 10, an embodiment of a memory mapping circuit 1000 provided in embodiments of this application includes:
an obtaining circuit 1001, configured to obtain a memory failed row address of a first memory, where the obtaining unit 1001 may perform step 201 in the foregoing method embodiment; and
a matching and searching circuit 1002, configured to obtain the memory failed row address from the obtaining circuit 1001, where the matching and searching circuit 1002 is further configured to obtain an address mapping table, where the address mapping table includes a mapping relationship between the memory failed row address and a memory remapping row address corresponding to the memory failed row address. When an access target of the first memory is the memory failed row address, the matching and searching circuit 1002 is configured to obtain, based on the address mapping table, the memory remapping row address to which the memory failed row address is mapped, where a memory area indicated by the memory remapping row address is in reserved space of the first memory, and the matching and searching circuit is integrated into an address command output circuit or a drive circuit in a memory access path of the first memory. The matching and searching circuit 1002 may perform step 202 in the foregoing method embodiment.

Optionally, the memory mapping circuit 1000 is integrated into a memory, and the memory includes a plurality of memory chips configured to provide the reserved space; or the memory mapping circuit 1000 is integrated into a processor, and the processor is any one of a central processing unit CPU, a data processing unit DPU, an embedded neural network processing unit NPU, a graphics processing unit GPU, or a tensor processing unit TPU.

Optionally, the matching and searching circuit 1002 is further configured to: obtain a memory access address from the outside of the first memory; use the obtained memory access address, and perform matching on the memory access address based on the address mapping table; and when the memory access address is matched in the memory failed row address, translate access to the memory access address into access to the memory remapping row address.

Optionally, the first memory includes a plurality of memory chips, and the matching and searching circuit 1002 uses the plurality of memory chips as a whole for row address translation. The matching and searching circuit 1002 is specifically configured to: when a failed row occurs in a single memory chip, translate row addresses in the plurality of memory chips into memory remapping row addresses based on the address mapping table, where translated rows include the failed row.

Optionally, each of the plurality of memory chips includes a plurality of memory banks memory banks, and the reserved space of the first memory includes at least one row of storage units of each of the plurality of memory banks.

Optionally, the address mapping table is stored in a volatile memory in the matching and searching circuit 1002. The memory mapping circuit 1000 further includes a read/write circuit 1003. The read/write circuit 1003 is configured to: before the first memory stops working, write the address mapping table into a first storage from the matching and searching circuit 1002, where the first storage is a non-volatile memory located in a computing device. The read/write unit 1004 is further configured to: after the first memory starts to work, load the address mapping table in the first storage to the matching and searching circuit 1002.

Optionally, in a start process of a computing device loaded with the first memory, the read/write circuit 1003 is further configured to: read the address mapping table from the first storage, and update the address mapping table through memory self-check of the computing device.

Optionally, the volatile memory in the matching and searching circuit 1002 is a content addressable memory, a ternary content addressable memory, or a fully associative cache.

Optionally, the address mapping table is stored in a non-volatile memory in the matching and searching circuit 1002.

Optionally, the memory mapping circuit 1000 further includes a generating circuit 1004. The generating circuit 1004 is configured to: when the computing device loaded with the first memory is started, generate the address mapping table; and before the computing device uses the first memory, synchronize the address mapping table to the matching and searching circuit 1002.

Optionally, the obtaining unit 1001 is specifically configured to: obtain a first memory fault log of the first memory; extract a first memory fault feature from the first memory fault log; and perform prediction based on the first memory fault feature to obtain the memory failed row address of the first memory.

Optionally, the memory mapping circuit 1000 further includes a releasing circuit 1005. The releasing circuit 1005 is configured to: perform an access test on the memory failed row address to determine whether the memory failed row address is a real failed row address; and when the memory failed row address is not the real failed row address, release the memory failed row address and the memory remapping row address corresponding to the memory failed row address from the address mapping table.

Optionally, the memory mapping circuit 1000 further includes a sending circuit 1006. The sending circuit 1006 is configured to send a first command, where the first command is used to enable stopping obtaining the memory failed row address of the first memory.

Optionally, the matching and searching circuit 1002 is integrated into a memory controller or a registering clock driver in the address command output circuit or the drive circuit.

For understanding of the memory mapping circuit 1000 provided in this embodiment of this application, refer to corresponding content in the foregoing memory mapping method embodiment. Details are not described herein again.

FIG. 11 is a diagram of a possible logical structure of a computing device according to an embodiment of this application. The computing device includes a mainboard 1101, a processor 1102, a memory 1103, and a memory mapping circuit 1104.

The mainboard 1101 is configured to: perform memory failed row detection, and send a memory failed row address to the memory mapping circuit 1104. The memory mapping circuit 1104 is integrated into the processor 1102 or the memory 1103 (as shown in FIG. 11, the memory mapping circuit 1104 is integrated into the memory 1103). The memory mapping circuit 1104 is configured to perform the memory mapping method described in the foregoing embodiment in FIG. 2 to FIG. 9. The memory 1103 is used as a first memory to perform memory failed row address mapping.

Specifically, the memory 1103 is the first memory in the method embodiment. The memory mapping circuit 1104 includes the matching and searching circuit in the method embodiment, and is specifically a memory controller or a registering clock driver. Alternatively, the memory mapping circuit 1104 includes the obtaining circuit 1001, the matching and searching circuit 1002, the read/write circuit 1003, the generating circuit 1004, the releasing circuit 1005, and the sending circuit 1006 shown in FIG. 10. The memory mapping circuit 1104 may perform the foregoing memory mapping method for the memory 1103.

In another embodiment of this application, a computer-readable storage medium is further provided. The computer-readable storage medium stores computer-executable instructions. When at least one processor of a device executes the computer-executable instructions, the device performs the memory mapping method described in the foregoing embodiment in FIG. 2 to FIG. 9.

In another embodiment of this application, a computer program product is further provided. The computer program product includes computer-executable instructions, and the computer-executable instructions are stored in a computer-readable storage medium. At least one processor of a device may read the computer-executable instructions from the computer-readable storage medium. When the at least one processor executes the computer-executable instructions, the device is enabled to perform the memory mapping method described in the foregoing embodiment in FIG. 2 to FIG. 9.

In another embodiment of this application, a chip system is further provided. The chip system includes at least one processor and an interface. The interface is configured to receive data and/or a signal. The at least one processor is configured to support implementation of the memory mapping method described in the foregoing embodiment in FIG. 2 to FIG. 9. In a possible design, the chip system may further include a storage. The storage is configured to store program instructions and data that are necessary for a computer device. The chip system may include a chip, or may include a chip and another discrete component.

A person of ordinary skill in the art may be aware that, in combination with the examples described in embodiments disclosed in this specification, units and algorithm steps can be implemented by electronic hardware or a combination of computer software and electronic hardware. Whether functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the foregoing described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units, that is, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium such as a USB flash drive, a removable hard disk, a read-only memory (ROM, read-only memory), a random access memory (RAM, random access memory), a magnetic disk, or an optical disc, that can store program code.

## Claims

1. A memory mapping method, comprising:
obtaining a memory failed row address of a first memory;
obtaining, by a matching and searching circuit, an address mapping table, wherein the address mapping table comprises a mapping relationship between the memory failed row address and a memory remapping row address corresponding to the memory failed row address; and
when an access target of the first memory is the memory failed row address, obtaining, based on the address mapping table, the memory remapping row address to which the memory failed row address is mapped, wherein a memory area indicated by the memory remapping row address is in reserved space of the first memory, and the matching and searching circuit is integrated into an address command output circuit or a drive circuit in a memory access path of the first memory.

2. The method according to claim 1, wherein the method further comprises:
obtaining a memory access address from the outside of the first memory;
using the obtained memory access address, and performing matching on the memory access address based on the address mapping table; and
when the memory access address is matched in the memory failed row address, translating access to the memory access address into access to the memory remapping row address.

3. The method according to claim 1 or 2, wherein the first memory comprises a plurality of memory chips, the matching and searching circuit uses the plurality of memory chips as a whole for row address translation, and the step of obtaining, based on the address mapping table, the memory remapping row address to which the memory failed row address is mapped specifically comprises:
when a failed row occurs in a single memory chip, translating row addresses in the plurality of memory chips into memory remapping row addresses based on the address mapping table, wherein translated rows comprise the failed row.

4. The method according to claim 3, wherein each of the plurality of memory chips comprises a plurality of memory banks memory banks, and the reserved space of the first memory comprises at least one row of storage units of each of the plurality of memory banks.

5. The method according to any one of claims 1 to 4, wherein the address mapping table is stored in a volatile memory in the matching and searching circuit, and the method further comprises:
before the first memory stops working, writing the address mapping table into a first storage from the matching and searching circuit, wherein the first storage is a non-volatile memory; and
after the first memory starts to work, loading the address mapping table in the first storage to the matching and searching circuit.

6. The method according to claim 5, wherein the method further comprises:
in a start process of a computing device loaded with the first memory, reading the address mapping table from the first storage, and updating the address mapping table through memory self-check of the computing device.

7. The method according to claim 5 or 6, wherein the volatile memory in the matching and searching circuit is a content addressable memory, a ternary content addressable memory, or a fully associative cache.

8. The method according to any one of claims 1 to 4, wherein the address mapping table is stored in a non-volatile memory in the matching and searching circuit.

9. The method according to any one of claims 1 to 8, wherein the obtaining, by a matching and searching circuit, an address mapping table comprises:
when the computing device loaded with the first memory is started, generating the address mapping table; and
the method further comprises:
before the computing device uses the first memory, synchronizing the address mapping table to the matching and searching circuit.

10. The method according to any one of claims 1 to 9, wherein the obtaining a memory failed row address of a first memory comprises:
obtaining a first memory fault log of the first memory;
extracting a first memory fault feature from the first memory fault log; and
performing prediction based on the first memory fault feature to obtain the memory failed row address of the first memory.

11. The method according to any one of claims 1 to 10, wherein the method further comprises:
performing an access test on the memory failed row address to determine whether the memory failed row address is a real failed row address; and
when the memory failed row address is not the real failed row address, releasing the memory failed row address and the memory remapping row address corresponding to the memory failed row address from the address mapping table.

12. The method according to any one of claims 1 to 11, wherein the method further comprises:
sending a first command, wherein the first command is used to enable stopping obtaining the memory failed row address of the first memory.

13. The method according to any one of claims 1 to 12, wherein the matching and searching circuit is integrated into a memory controller or a registering clock driver in the address command output circuit or the drive circuit.

14. A memory mapping circuit, comprising:
an obtaining circuit, configured to obtain a memory failed row address of a first memory; and
a matching and searching circuit, configured to obtain the memory failed row address from the obtaining circuit, wherein the matching and searching circuit is further configured to obtain an address mapping table, wherein the address mapping table comprises a mapping relationship between the memory failed row address and a memory remapping row address corresponding to the memory failed row address; and
when an access target of the first memory is the memory failed row address, the matching and searching circuit is configured to obtain, based on the address mapping table, the memory remapping row address to which the memory failed row address is mapped, wherein a memory area indicated by the memory remapping row address is in reserved space of the first memory, and the matching and searching circuit is integrated into an address command output circuit or a drive circuit in a memory access path of the first memory.

15. The circuit according to claim 14, wherein the memory mapping circuit is integrated into a memory, and the memory comprises a plurality of memory chips configured to provide the reserved space; or
the memory mapping circuit is integrated into a processor, and the processor is any one of a central processing unit CPU, a data processing unit DPU, an embedded neural network processing unit NPU, a graphics processing unit GPU, or a tensor processing unit TPU.

16. The circuit according to claim 14 or 15, wherein the matching and searching circuit is further configured to:
obtain a memory access address from the outside of the first memory; use the obtained memory access address, and
perform matching on the memory access address based on the address mapping table; and when the memory access address is matched in the memory failed row address, translate access to the memory access address into access to the memory remapping row address.

17. The circuit according to any one of claims 14 to 16, wherein the first memory comprises a plurality of memory chips, and the matching and searching circuit uses the plurality of memory chips as a whole for row address translation; and
the matching and searching circuit is specifically configured to: when a failed row occurs in a single memory chip, translate row addresses in the plurality of memory chips into memory remapping row addresses based on the address mapping table, wherein translated rows comprise the failed row.

18. The circuit according to claim 17, wherein each of the plurality of memory chips comprises a plurality of memory banks memory banks, and the reserved space of the first memory comprises at least one row of storage units of each of the plurality of memory banks.

19. The circuit according to any one of claims 14 to 18, wherein the address mapping table is stored in a volatile memory in the matching and searching circuit, and the circuit further comprises:
a read/write circuit, configured to: before the first memory stops working, write the address mapping table into a first storage from the matching and searching circuit, wherein the first storage is a non-volatile memory, wherein
the read/write circuit is further configured to: after the first memory starts to work, load the address mapping table in the first storage to the matching and searching circuit.

20. The circuit according to claim 19, wherein in a start process of a computing device loaded with the first memory, the read/write circuit is further configured to: read the address mapping table from the first storage, and update the address mapping table through memory self-check of the computing device.

21. The circuit according to claim 19 or 20, wherein the volatile memory in the matching and searching circuit is a content addressable memory, a ternary content addressable memory, or a fully associative cache.

22. The circuit according to any one of claims 14 to 18, wherein the address mapping table is stored in a non-volatile memory in the matching and searching circuit.

23. The circuit according to any one of claims 14 to 22, wherein the circuit further comprises:
a generating circuit, configured to: when the computing device loaded with the first memory is started, generate the address mapping table; and before the computing device uses the first memory, synchronize the address mapping table to the matching and searching circuit.

24. The circuit according to any one of claims 14 to 23, wherein the obtaining circuit is specifically configured to: obtain a first memory fault log of the first memory; extract a first memory fault feature from the first memory fault log; and perform prediction based on the first memory fault feature to obtain the memory failed row address of the first memory.

25. The circuit according to any one of claims 14 to 24, wherein the circuit further comprises:
a releasing circuit, configured to: perform an access test on the memory failed row address to determine whether the memory failed row address is a real failed row address; and when the memory failed row address is not the real failed row address, release the memory failed row address and the memory remapping row address corresponding to the memory failed row address from the address mapping table.

26. The circuit according to any one of claims 14 to 25, wherein the circuit further comprises:
a sending circuit, configured to send a first command, wherein the first command is used to enable stopping obtaining the memory failed row address of the first memory.

27. The circuit according to any one of claims 14 to 26, wherein the matching and searching circuit is integrated into a memory controller or a registering clock driver in the address command output circuit or the drive circuit.

28. A computing device, comprising a mainboard, a processor, a memory, and the memory mapping circuit according to any one of claims 14 to 27, wherein
the mainboard is configured to: perform memory failed row detection, and send a memory failed row address to the memory mapping circuit, wherein the memory mapping circuit is integrated into the processor or the memory, and the memory is used as a first memory to perform memory failed row address mapping.

29. A computer-readable storage medium, wherein the computer-readable storage medium stores a computer program, and when the computer program is executed by a processor, the method according to any one of claims 1 to 13 is implemented.
